# EUROPÄISCHE PATENTSCHRIFT

(11) **EP 0 844 406 B1**
(45) Veröffentlichungstag und Bekanntmachung des Hinweises auf die Patenterteilung: **13.03.2002**
(21) Anmeldenummer: 97118232.4
(22) Anmeldetag: 21.10.1997
(51) Int. Cl.: F16B 47/00, B60R 11/02

(54) **Adapterplatte für einen Vakuumsauger**
Adaptation plate for a sucker device
Plaque d'adaptation pour une ventouse.

(30) Priorität: 22.11.1996 DE 19648401
(43) Veröffentlichungstag der Anmeldung: 27.05.1998
(73) Patentinhaber: Herbert Richter Metallwaren-Apparatebau GmbH & Co., 75180 Pforzheim (DE)
(72) Erfinder: Richter, Herbert, 7543 Engelsbrand (DE)
(74) Vertreter: Dimmerling, Heinz, Dipl.-Ing.

(56) Entgegenhaltungen:
- DE-U- 29 602 411
- US-A- 2 968 460
- US-A- 5 133 524

## Beschreibung

Die Erfindung betrifft eine Adapterplatte für einen Vakuumsauger, mit einer Vorderseite und einer Rückseite.

Vakuumsauger haben sich insbesondere in jüngster Zeit als gut funktionierende Befestigungsmittel erwiesen. So können mittels Vakuumsaugem die unterschiedlichsten Gegenstände auf glatten Flächen befestigt werden. Um mittels Vakuumsaugern möglichst unterschiedliche Gegenstände befestigen zu können, wurden Vakuumsauger entwickelt, welche zur Aufnahme von Haltelaschen oder verbiegbaren Stäben, sogenannten Schwanenhälsen, geeignet sind.

So ist beispielsweise aus dem deutschen Gebrauchsmuster 296 02 411.2 ein Vakuumsauger bekannt, welcher an seinem Betätigungselement einen Stift aufweist, an welchem eine Haltelasche schwenkbar befestigt ist. An die Haltelasche kann beispielsweise ein Telefonhalter für Funktelefone angebracht werden.

Des weiteren ist es aus dem genannten Gebrauchsmuster bekannt, an dem Vakuumsauger einen Hohlzylinder auszubilden. In den Hohlzylinder können zylinderförmige Zapfen, wie beispielsweise das Ende eines Schwanenhalses, eingesteckt werden. Am anderen Ende des Schwanenhalses kann ebenfalls ein Telefonhalter für ein Funktelefon angebracht sein.

Mittels des bekannten Saugers lassen sich somit auf sehr einfache Weise Gegenstände, wie beispielsweise die genannten Telefonhalter für Funktelefone, sicher und fest auf glatten Flächen anbringen. Dies ermöglicht es, beispielsweise in einem Kraftfahrzeug ein Funktelefon so anzubringen, daß es leicht erreichbar ist.

Wenngleich der bekannte Vakuumsauger auch seinen Zweck im wesentlichen sehr gut erfüllt, so hat er doch den Nachteil, daß er nur auf glatten Fläche, wie beispielsweise Glas oder Resopal, sicher haftet. Zur sicheren Haftung muß ein absolut glatter Untergrund vorhanden sein. Bekannte Sauger können auf einem Kunststoffleder mit Narben oder einem sonstigen Kunststoff mit einer Struktur nicht angebracht werden. Auch auf rauhen Oberflächen von Holzmöbeln oder Tischplatten können bekannte Sauger nicht angebracht werden.

Aus der US-PS 2,968,460 ist es bekannt, zur Befestigung eines Vakuumsaugers an einer Wand die Wand mit einer luftundurchlässigen, flexiblen Membrane zu versehen. Die Membrane wird vor der Befestigung des Vakuumsaugers auf die Wand geklebt, wodurch erreicht wird, daß die Fläche unterhalb des Vakuumsaugers als luftundurchlässige Schicht ausgebildet ist. Hierdurch soll vermieden werden, daß Luft durch sich in der Wand befindliche Risse oder Poren in den Bereich unterhalb des Vakuumsaugers gelangen kann, wodurch die Haftwirkung des Vakuumsaugers aufgehoben würde.

Aus der US-PS 5,133,524 ist ein Vakuumsauger bekannt, bei welchem zum Ausgleich von Unebenheiten in der Fläche, an der der Vakuumsauger befestigt werden soll ein nachgiebiges, federndes Element auf der Membran des Vakuumsaugers befestigt ist.

Es ist Aufgabe der Erfindung, eine Vorrichtung zur Verfügung zu stellen, mittels der ein bekannter Sauger auf nicht glatten Oberflächen anbringbar ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Adapterplatte mit einer Vorderseite und einer Rückseite vorgesehen, bei welcher die Vorderseite eine ebene, glatte Oberfläche hat, welche geringfüg größer als die vom Vakuumsauger abgedeckte Fläche ist, und Mittel zur Befestigung der Adapterplatte vorhanden sind. Durch die Befestigungsmittel kann die Adapterplatte an beliebigen Stellen angebracht werden. Da die Adapterplatte auf ihrer Vorderseite eine ebene, glatte Oberfläche hat, kann auf der Vorderseite der Adapterplatte ein bekannter Vakuumsauger sicher befestigt werden. Durch die Adapterplatte ist es somit möglich, bekannte Vakuumsauger auf einer nicht glatten Oberfläche zu befestigen. Somit können mittels der erfindungsgemäßen Adapterplatte die Vorteile einer Befestigung von Gegenständen mittels eines Vakuumsaugers auch bei nicht glatten Oberflächen erreicht werden.

In besonders vorteilhafter Weise weist die Rückseite der Adapterplatte eine selbstklebende Oberfläche auf. Hierdurch läßt sich die Adapterplatte auf einfache Weise schnell an beliebigen Gegenständen anbringen. Wenngleich eine selbstklebende Oberfläche auch besonders vorteilhaft ist, so kann die Rückseite der Adapterplatte auch andere Befestigungsmittel, wie beispielsweise einen Klettverschluß, aufweisen. Darüber hinaus ist es möglich, in der Adapterplatte Öffnungen anzubringen, mittels welcher die Adapterplatte an anderen Gegenständen beispielsweise angeschraubt oder angenäht werden kann. Besonders vorteilhaft ist es, wenn die Grundfläche der Adapterplatte sich seitlich von ihr erstreckende Hervorstehungen hat, in welchen Löcher angebracht sind. So kann die Adapterplatte beispielsweise seitlich drei laschenförmige Hervorstehungen aufweisen, welche so ausgebildet sind, daß die Grundfläche eine etwa dreieckförmige Gestalt hat, wie sie beispielsweise vom Wankelmotor her bekannt ist. Hierdurch erhält die Adapterplatte neben einer sicheren Befestigungsmöglichkeit auch ein formschönes Äußeres.

Besonders vorteilhaft ist, daß die Fläche der Adapterplatte etwa der vom Vakuumsauger abgedeckten Fläche entspricht beziehungsweise geringfügig größer ist. Hierdurch wird die Adapterplatte nahezu vollständig vom Vakuumsauger abgedeckt. Es ist jedoch darauf zu achten, daß die Fläche der Adapterplatte nicht kleiner ist als die vom Vakuumsauger abgedeckte Fläche, da ansonsten der Vakuumsauger nicht sicher auf der Adapterplatte befestigt werden kann.

In besonders vorteilhafter Weise weist die Adapterplatte an ihrem Umfang einen stegförmigen umlaufenden Rand auf, welcher sich an der Vorderseite in die der Rückseite abgewandte Richtung erstreckt. Durch den Rand ist gewährleistet, daß der Vakuumsauger stets voll auf einer planen Fläche aufgesetzt wird. Durch den Rand wird verhindert, daß der Vakuumsauger so auf die Adapterplatte aufgesetzt wird, daß der Vakuumsauger sich nicht voll auf der Abdeckplatte befindet, wodurch die Funktion des Vakuumsaugers gestört ist. Des weiteren wird durch den Rand die Haftfunktion des Vakuumsaugers noch dadurch erhöht, daß der Rand den Rand des Vakuumsaugers formschlüssig umschließt. Hierdurch wird der Lufteintritt in den Vakuumsauger erschwert, da der Rand den seitlichen Bereich des Vakuumsaugers abdichtet. Darüber hinaus wird durch den Rand vermieden, daß der Bereich zwischen Vakuumsauger und Adapterplatte seitlich zugänglich ist, wodurch ein Eindringen von fremden Gegenständen in diesen Bereich verhindert wird.

Bei einer weiteren besonderen Ausführungsform der Erfindung ist vorgesehen, daß der Rand wenigstens eine Unterbrechungsstelle aufweist. Durch die Unterbrechungsstelle ist es möglich, eine mit der Saugfläche des Vakuumsaugers verbundene Lasche nach außen zu führen. Durch die Lasche wird in vorteilhafter Weise erreicht, daß der durch den Rand bedingten sehr feste Sitz des Saugers auf der Adapterplatte leicht gelöst werden kann. Der Vakuumsauger kann ähnlich wie der Dekkel eines Einweckglases durch Zug an dem zwischen Deckel und Einweckglas befindlichen Gummiring gelöst werden. Auf die Saugwirkung haben die Unterbrechungsstellen einen zu vernachlässigenden Einfluß.

Als besonders vorteilhaft hat sich auch eine Ausführungsform der Adapterplatte herausgestellt, bei der die Rückseite einen gebogenen Verlauf nimmt. Durch den gebogenen Verlauf der Rückseite läßt sich die Adapterplatte besonders leicht an Gegenständen befestigen, welche ebenfalls nicht eben sind. In besonders vorteilhafter Weise läßt sich eine derartige Adapterplatte im Bereich des Armaturenbretts eines Kraftfahrzeuges anbringen.

Bei einer weiteren besonders vorteilhaften Ausführungsform der Erfindung sind zwei Adapterplatten nebeneinander auf einer Grundplatte angeordnet, wobei die gesamte Anordnung auch einstückig ausgebildet sein kann. Hierdurch wird in vorteilhafter Weise eine Befestigungsmöglichkeit für zwei Sauger zur Verfügung gestellt. Darüber hinaus besteht die Möglichkeit, die Grundplatte im Bereich der Angrenzung der Adapterplatten mit Löchern zu versehen, wodurch eine besonders vorteilhafte Befestigungsmöglichkeit geschaffen wird.

Besonders vorteilhaft ist es, wenn die Vorderseite der Adapterplatte als eine obere Scheibe und die Rückseite der Adapterplatte als eine untere Scheibe ausgebildet ist, welche drehbar aufeinander angeordnet sind. Hierdurch ist es möglich, einen auf der Vorderseite, das heißt der Oberfläche der oberen Scheibe angeordneten Vakuumsauger ohne den Vakuumsauger zu lösen drehen zu können. Eine Ausführungsform, bei der die untere Scheibe wenigstens drei am Umfang angeordnete Haltekrallen aufweist, welche sich senkrecht zur Ebene der unteren Scheibe erstrecken und an ihren der unteren Scheibe abgewandten Enden Vorsprünge aufweisen, welche sich in axialer Richtung über die untere Scheibe erstrecken, ist besonders vorteilhaft, da sie sich zum einen sehr preiswert herstellen läßt und zum anderen wegen ihrer Einfachheit eine zuverlässige Funktion bietet. Bei einer derartigen Ausführungsform kann die obere Scheibe auf die untere Scheibe aufgesetzt werden, so daß sie unter die Vorsprünge einrastet, wodurch sie ohne weitere zusätzliche Lagerungen drehbar auf der unteren Scheibe gehalten wird.

Besonders vorteilhaft ist es, wenn an den Haltekrallen Hervorstehungen ausgebildet sind, welche sich axial über die untere Scheibe erstrecken und in am Umfang der oberen Scheibe ausgebildete entsprechende Ausnehmungen einrasten können. Hierdurch kann die obere Scheibe auf einfache Weise in unterschiedlichen Stellungen arretiert werden. Selbstverständlich können auch statt drei Haltekrallen mehrere Haltekrallen wie beispielsweise vier bis zehn oder zwanzig vorgesehen werden.

Durch die erfindungsgemäße Adapterplatte wird in verblüffend einfacher Weise ein erheblicher Vorteil erreicht. Denn mittels der erfindungsgemäßen Adapterplatte ist es nunmehr möglich, die Vorteile einer Befestigung mittels eines Vakuumsaugers auch bei Gegenständen zu erreichen, bei denen Vakuumsauger bisher nicht eingesetzt werden konnten. So lassen sich mittels der erfindungsgemäßen Adapterplatte insbesondere in einem Kraftfahrzeug Gegenstände mittels eines Vakuumsaugers an vielen Stellen befestigen, wo dies bisher nicht möglich war. Denn die Adapterplatte kann an nahezu allen Stellen befestigt werden. So kann sie beispielsweise an der Seitenverkleidung oder am Fahrzeugdach genausogut befestigt werden, wie auf der rückwärtigen Ablage oder am Armaturenbrett. Darüber hinaus besteht sogar die Möglichkeit, die Adapterplatte an der Polsterung eines Fahrzeugsitzes zu befestigen, wozu in vorteilhafter Weise als Befestigungsmittel ein Klettverschluß oder ähnliches verwendet wird.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine unterhalb eines Vakuumsaugers angeordnete erfindungsgemäße Adapterplatte in Seitenansicht im Schnitt, und
- Fig. 2: die in Fig. 1 dargestellte Adapterplatte in der Draufsicht,
- Fig. 3: eine zweite Ausführungsform einer unterhalb eines Vakuumsaugers angeordneten erfindungsgemäßen Adapterplatte in Seitenansicht im Schnitt,
- Fig. 4: die in Figur 3 dargestellte Adapterplatte in der Draufsicht,
- Fig. 5: eine dritte Ausführungsform einer erfindungsgemäßen Adapterplatte in der Draufsicht,
- Fig. 6: die in Figur 5 dargestellte Adapterplatte in Seitenansicht,
- Fig. 7: eine obere Scheibe in der Draufsicht sowie in Seitenansicht,
- Fig. 8: eine untere Scheibe in Draufsicht sowie in Seitenansicht im Schnitt und
- Fig. 9: den Zusammenbau der in den Figuren 7 und 8 gezeigten Scheiben in Draufsicht sowie in Seitenansicht im Schnitt einschließlich einer vergrößerten Einzelheit.

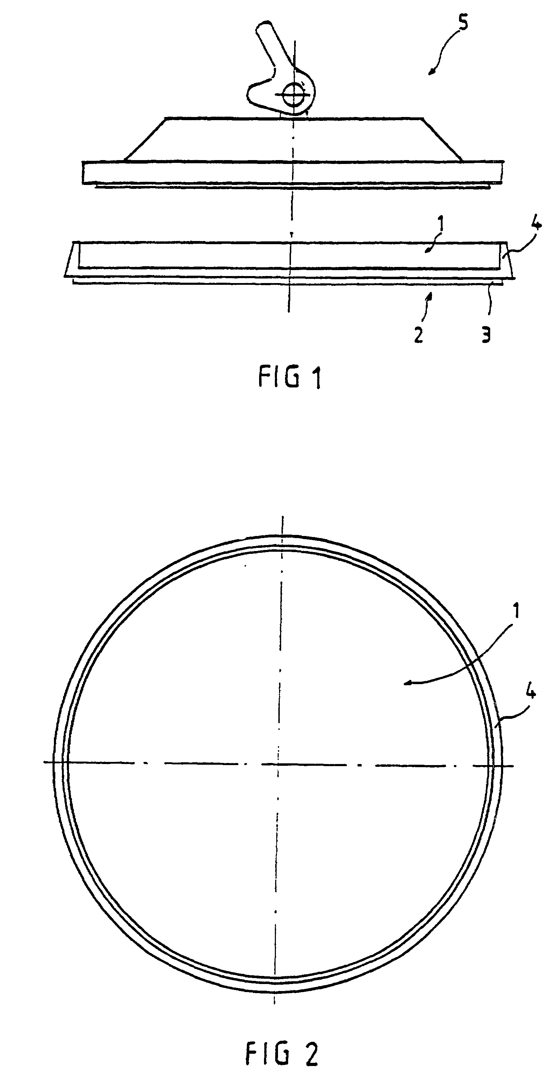

Wie den Figuren 1 und 2 entnommen werden kann, hat eine Adapterplatte eine Vorderseite 1 und eine Rückseite 2. An der Rückseite 2 ist ein als selbstklebende Folie 3 ausgebildetes Befestigungsmittel angebracht. Die Adapterplatte ist als kreisrunde Scheibe ausgebildet. Am Umfang der Adapterplatte ist ein stegförmiger, umlaufender Rand 4 ausgebildet. Der Rand 4 erstreckt sich an der Vorderseite 1 in die der Rückseite 2 abgewandte Richtung.

Durch den Rand 4 wird eine Vertiefung gebildet, in die formschlüssig ein in der Fig. 1 oberhalb der Adapterplatte dargestellter Vakuumsauger 5 einbringbar ist Durch den Rand 4 wird verhindert, daß der Bereich zwischen dem Vakuumsauger 5 und der Vorderseite 1 der Adapterplatte seitlich zugänglich ist. Durch das formschlüssige Umschließen des Vakuumsaugers 5 durch den Rand 4 wird die Haftfähigkeit des Vakuumsaugers erhöht, da der Rand 4 eine Dichtfunktion erfüllt.

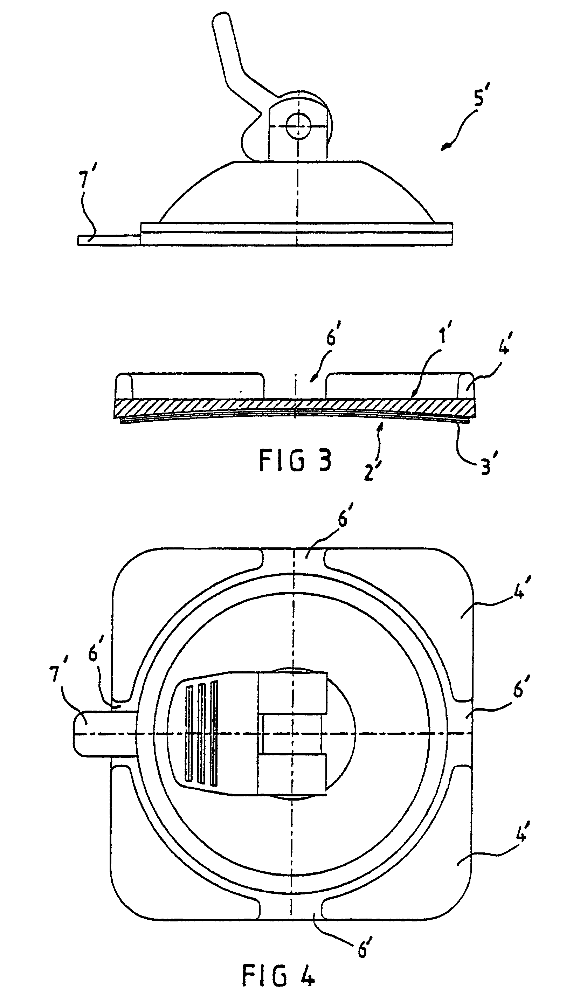

Die in den Figuren 3 und 4 dargestellte Adapterplatte ist im wesentlichen wie die in den Figuren 1 und 2 dargestellte Adapterplatte. Statt als kreisrunder Scheibe ist sie jedoch als viereckige Platte mit abgerundeten Ecken ausgebildet. Sie weist jedoch auch eine Vorderseite 1' und eine Rückseite 2' auf. An der Rückseite 2' ist ein als selbstklebende Folie 3' ausgebildetes Befestigungsmittel angebracht. Am Umfang der Adapterplatte ist ein stegförmiger, umlaufender Rand 4' ausgebildet. Der Rand 4' erstreckt sich an der Vorderseite 1' in die der Rückseite 2' abgewandte Richtung. Der Rand 4' ist an vier Stellen 6' unterbrochen. An den Unterbrechungsstellen 6' kann eine Lasche 7' nach außen geführt werden, welche mit der Saugfläche des Vakuumsaugers 5' verbunden ist. Der Rand 4' füllt bis auf die Ausnehmungen 6' den Raum zwischen der der Saugfläche des Vakuumsaugers 5' entsprechenden Fläche und der äußeren Umrandung der Platte aus.

Durch den Rand 4' wird eine Vertiefung gebildet, in die der in der Figur 3 oberhalb der Adapterplatte dargestellte Vakuumsauger 5 einbringbar ist Durch den Rand 4' wird im wesentlichen verhindert, daß der Bereich zwischen dem Vakuumsauger 5' und der Vorderseite 1' der Adapterplatte seitlich zugänglich ist. Die durch das formschlüssige Umschließen des Vakuumsaugers 5' durch den Rand 4' erhöhte Haftfähigkeit des Vakuumsaugers wird durch die Unterbrechungsstellen 6' nur unwesentlich gemindert.

Die Rückseite 2' weist einen gebogenen Verlauf auf. Zu beachten ist jedoch, daß lediglich die Rückseite 2' einen gebogenen Verlauf aufweist; die Vorderseite 1' hingegen glatt und eben ist.

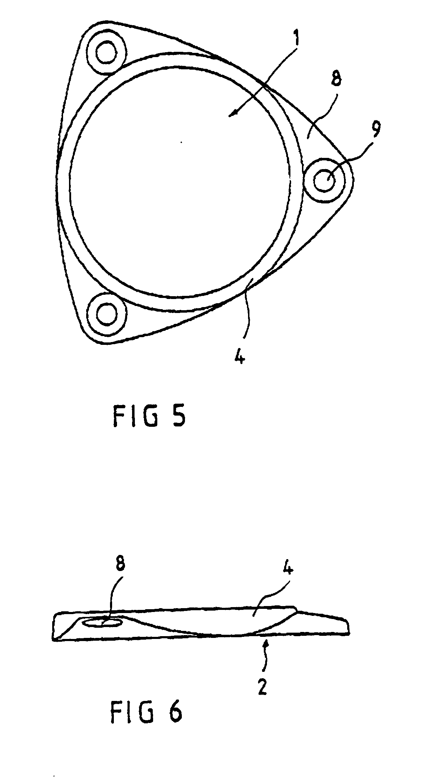

Die in den Figuren 5 und 6 dargestellte Adapterplatte entspricht im wesentlichen den vorher beschriebenen Adapterplatten. Sie ist jedoch auf einer Grundplatte 8 angeordnet, welche etwa dreieckförmig ausgebildet ist, wie es vom Wankelmotor her bekannt ist. Durch die dreieckförmige Ausbildung der Grundplatte 8 weist die Adapterplatte seitliche Hervorstehungen auf, in welchen Löcher 9 angebracht sind. Die Löcher 9 sind angesenkt. Statt dreieckförmig kann die Grundplatte auch eine andere Form aufweisen, wodurch sie mehrere Hervorstehungen aufweist, in welchen Löcher angebracht sind. So könnte die Grundplatte eine seitliche Hervorstehung aufweisen, welche sich kreisförmig um sie herum erstreckt, so daß beliebig viele Löcher angebracht werden können.

Darüber hinaus weist sie auch eine Vorderseite 1" und eine Rückseite 2" auf. Am Umfang der Adapterplatte ist ein stegförmiger, umlaufender Rand 4" ausgebildet. Der Rand 4" erstreckt sich an der Vorderseite 1" in die der Rückseite 2" abgewandte Richtung. Der Rand 4" ist so ausgebildet, daß er einen auf die Adapterplatte angeordneten Vakuumsauger formschlüssig umschließt.

Wenngleich in der Zeichnung auch ein Vakuumsauger mit einer Betätigungsvorrichtung gezeigt ist, so versteht sich jedoch von selbst, daß die erfindungsgemäße Adapterplatte auch in Verbindung mit einem Vakuumsauger ohne Betätigungsvorrichtung verwendet werden kann.

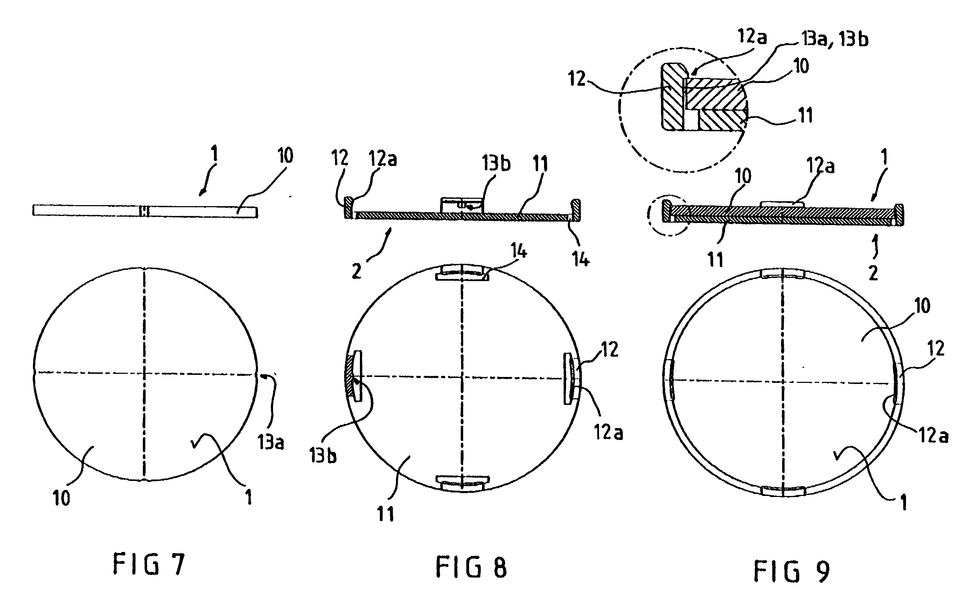

Wie den Figuren 7 bis 9 entnommen werden kann, kann die Vorderseite 1 die Oberfläche einer oberen Scheibe 10 sein und die Rückseite 2 die Oberfläche einer unteren Scheibe 11 sein. Die obere Scheibe 10 weist an ihrem Umfang vier Ausnehmungen 13a auf. Die untere Scheibe 11 weist an ihrem Umfang Haltekrallen 12 auf, welche sich senkrecht zur Ebene der unteren Scheibe 11 erstrecken. Die Haltekrallen 12 weisen an ihren der unteren Scheibe 11 abgewandten Enden Vorsprünge 12a auf, welche sich in axialer Richtung über die untere Scheibe 11 erstrecken.

Die Haltekrallen 12 weisen darüber hinaus Hervorstehungen 13b auf, welche so ausgebildet sind, daß sie in die Ausnehmungen 13a der oberen Scheibe 10 einrasten können.

Wie insbesondere der Figur 9 entnommen werden kann, übergreifen die Vorsprünge 12a der Haltekrallen 12 die obere Scheibe 10, so daß diese auf der unteren Scheibe 11 gehalten wird. Dadurch, daß die Hervorstehungen 13b in die Ausnehmungen 13a einrasten, kann die Stellung der oberen Scheibe 10 auf der unteren Scheibe 11 arretiert werden. Aus fertigungstechnischen Gründen sind in der unteren Scheibe 11 vor den Haltekrallen 12 Öffnungen 14 ausgebildet. Die obere Scheibe 10 sowie die untere Scheibe 11 mit ihren Haltekrallen sind aus Kunststoff hergestellt.

## Patentansprüche

1. Adapterplatte für einen Vakuumsauger (5), mit einer Vorderseite (1) und einer Rückseite (2),
**dadurch gekennzeichnet,**
**daß** die Vorderseite (1) eine ebene, glatte Oberfläche hat, welche geringfügig größer als die vom Vakuumsauger (5) abgedeckte Fläche ist, Mittel (3,9,12) zur Befestigung der Adapterplatte vorhanden sind und die Adapterplatte an ihrem Umfang einen stegförmigen, umlaufenden Rand (4) aufweist, welcher sich, ausgehend von der Vorderseite (1), in die der Rückseite (2) abgewandte Richtung erstreckt.

2. Adapterplatte nach Anspruch 1,
**dadurch gekennzeichnet,**
**daß** der Rand (4) wenigstens eine Unterbrechungsstelle (6) aufweist.

3. Adapterplatte nach einem der Ansprüche 1 bis 2,
**dadurch gekennzeichnet,**
**daß** die Befestigungsmittel (3) als selbstklebende Oberfläche der Rückseite (2) der Adapterplatte ausgebildet sind.

4. Adapterplatte nach einem der Ansprüche 1 bis 3,
**dadurch gekennzeichnet,**
**daß** die Oberfläche der Rückseite (2) einen gebogenen Verlauf hat.

5. Adapterplatte nach einem der Ansprüche 1 bis 4,
**dadurch gekennzeichnet,**
**daß** zwei Adapterplatten nebeneinander auf einer Grundplatte (8) angeordnet sind.

6. Adapterplatte nach einem der Ansprüche 1 bis 5,
**dadurch gekennzeichnet,**
**daß** die Vorderseite (1) als eine obere Scheibe (10) und die Rückseite (2) als eine untere Scheibe (11) ausgebildet ist, welche drehbar aufeinander angeordnet sind.

7. Adapterplatte nach Anspruch 6,
**dadurch gekennzeichnet,**
**daß** die untere Scheibe (11) wenigstens drei am Umfang angeordnete Haltekrallen (12) aufweist, welche sich senkrecht zur Ebene der unteren Scheibe (11) erstrecken und an ihren der unteren Scheibe abgewandten Enden Vorsprünge (12a) aufweisen, welche sich in axialer Richtung über die untere Scheibe (11) erstrecken.

8. Adapterplatte nach Anspruch 7,
**dadurch gekennzeichnet,**
**daß** an den Haltekrallen (12) Hervorstehungen (13b) ausgebildet sind, welche sich axial über die untere Scheibe (11) erstrecken und in am Umfang der oberen Scheibe (10) ausgebildete entsprechende Ausnehmungen (13a) einrasten können.

## Claims

1. An adaptor plate for a vacuum suction device (5) comprising a front side (1) and a rear side (2), **characterised in that** the front side (1) has a flat smooth surface which is slightly larger than the area covered by the vacuum suction device (5), there are means (3, 9, 12) for fixing the adaptor plate and the adaptor plate at its periphery has a flange-shaped peripherally extending edge (4) which, starting from the front side (1), extends in a direction remote from the rear side (2).

2. An adaptor plate according to claim 1 **characterised in that** the edge (4) has at least one interruption location (6).

3. An adaptor plate according to one of claims 1 and 2 **characterised in that** the fixing means.(3) are in the form of a self-adhesive surface of the rear side (2) of the adaptor plate.

4. An adaptor plate according to one of claims 1 to 3 **characterised in that** the surface of the rear side (2) is of a curved configuration.

5. An adaptor plate according to one of claims 1 to 4 **characterised in that** two adaptor plates are arranged in side-by-side relationship on a base plate (8).

6. An adaptor plate according to one of claims 1 to 5 **characterised in that** the front side (1) is in the form of an upper disc (10) and the rear side (2) is in the form of a lower disc (11) which are arranged rotatably one upon the other.

7. An adaptor plate according to claim 6 **characterised in that** the lower disc (11) has at least three holding claws (12) which are arranged at the periphery and which extend perpendicularly to the plane of the lower disc (11) and which at their ends remote from the lower disc have projections (12a) extending in the axial direction over the lower disc (11).

8. An adaptor plate according to claim 7 **characterised in that** provided on the holding claws (12) are protrusions (13b) which extend axially over the lower disc (11) and which can latchingly engage into corresponding openings (13a) at the periphery of the upper disc (10).

## Revendications

1. Plaque d'adaptation pour une ventouse (5), comprenant une face antérieure (1) et une face postérieure (2),
**caractérisée par le fait**
**que** la face antérieure (1) comporte une surface plane et lisse qui est sensiblement plus grande que la surface recouverte par la ventouse (5) ; des moyens (3, 9, 12) sont prévus pour fixer la plaque d'adaptation ; et ladite plaque d'adaptation présente, sur son pourtour, un bord périphérique (4) en forme de nervure s'étendant, à partir de la face antérieure (1), dans la direction tournée à l'opposé de la face postérieure (2).

2. Plaque d'adaptation selon la revendication 1,
**caractérisée par le fait**
**que** le bord (4) présente au moins une zone de discontinuité (6).

3. Plaque d'adaptation selon l'une des revendications 1 à 2,
**caractérisée par le fait**
**que** les moyens de fixation (3) sont réalisés sous la forme d'une surface auto-adhésive de la face postérieure (2) de ladite plaque d'adaptation.

4. Plaque d'adaptation selon l'une des revendications 1 à 3,
**caractérisée par le fait**
**que** la surface de la face postérieure (2) possède une allure curviligne.

5. Plaque d'adaptation selon l'une des revendications 1 à 4,
**caractérisée par le fait**
**que** deux plaques d'adaptation sont agencées en juxtaposition sur une plaque de base (8).

6. Plaque d'adaptation selon l'une des revendications 1 à 5,
**caractérisée par le fait**
**que** la face antérieure (1) et la face postérieure (2) sont réalisées, respectivement, sous la forme d'un disque supérieur (10) et d'un disque inférieur (11) disposés l'un sur l'autre avec faculté de rotation.

7. Plaque d'adaptation selon la revendication 6,
**caractérisée par le fait**
**que** le disque inférieur (11) comprend au moins trois griffes de retenue (12) disposées sur le pourtour, s'étendant perpendiculairement au plan du disque inférieur (11) et présentant, à leurs extrémités tournées à l'opposé dudit disque inférieur, des saillies (12a) qui s'étendent au-dessus dudit disque inférieur (11) dans le sens axial.

8. Plaque d'adaptation selon la revendication 7,
**caractérisée par le fait**
**que** des protubérances (13b), ménagées sur les griffes de retenue (12), s'étendent axialement au-dessus du disque inférieur (11) et peuvent s'encliqueter dans des évidements correspondants (13a), pratiqués sur le pourtour du disque supérieur (10).
